# EUROPEAN PATENT APPLICATION

(11) **EP 1 357 737 A1**
(43) Date of publication of application: **29.10.2003**
(21) Application number: 02009135.1
(22) Date of filing: 24.04.2002
(51) Int. Cl.: H04N 3/20

(54) **High voltage circuit for a display device**

(71) Applicant: DEUTSCHE THOMSON-BRANDT GMBH, 78048 Villingen-Schwenningen (DE)
(72) Inventor: Dieterle, Franz, 77761 Schiltach (DE); Läufer, Martin, 78052 Villingen-Obereschach (DE); Lopez, Daniel, 78052 Villingen-Obereschach (DE)
(74) Representative: Rossmanith, Manfred, Dr.

(57) **Abstract**

A high voltage circuit for a display device incorporating a cathode ray tube is provided. The circuit comprises a high voltage generator, having a transformer and a periodically actuated switch. The circuit further comprises means for obtaining a sensed signal, representing the high voltage applied to the cathode ray tube, and a comparator for comparing a reference signal and the sensed signal representing the high voltage and for outputting a fault signal indicative of excessive high voltage. A memory stores representations of a set of reference values, each reference value being associated with a selectable operating mode of the display device. Another means supplies the reference signal corresponding to the reference value associated with a selected operating mode. Upon occurrence of the fault signal the high voltage generator is disabled.

## Description

The invention relates to a high voltage circuit for a display device such as television receivers and computer displays, which incorporate cathode ray tubes (CRT). More particularly the invention relates to a high voltage circuit incorporating a high voltage generator, a sensor obtaining a signal representing the high voltage and a comparator comparing the signal representing the high voltage and a reference signal, issuing a fault signal upon detection of excessive high voltage and effecting disabling of the high voltage generator, thereby avoiding generation of excess X-radiation in the event of a device failure.

Television products or computer displays, which incorporate CRTs, are subject to strict legal regulations regarding the emission of X-radiation.

CRTs emit visible light by striking phosphors on the faceplate with electrons and transferring the electron's kinetic energy to light, heat, and other forms of energy, e.g., X-radiation. The frequency spectrum of photon emission is a property of the phosphor material. Besides the type of target material, the probability of emission of a photon of X-ray frequency depends on the accelerating potential (anode voltage) and the number of electrons striking the phosphor in a unit of time ("anode current" or "beam current").

In high performance television receivers and computer displays, the perceived light output is a function of the amount of beam current and high voltage power. In such receivers and monitors, it is desirable to set the operating point as high as possible, while strictly complying with X-ray protection regulations. Frequently, when component tolerances are considered, the high voltage operating point must be lower than desired to ensure the protection circuit will always trip at acceptable levels, but will not activate in normal operation, or during transients, such as channel change.

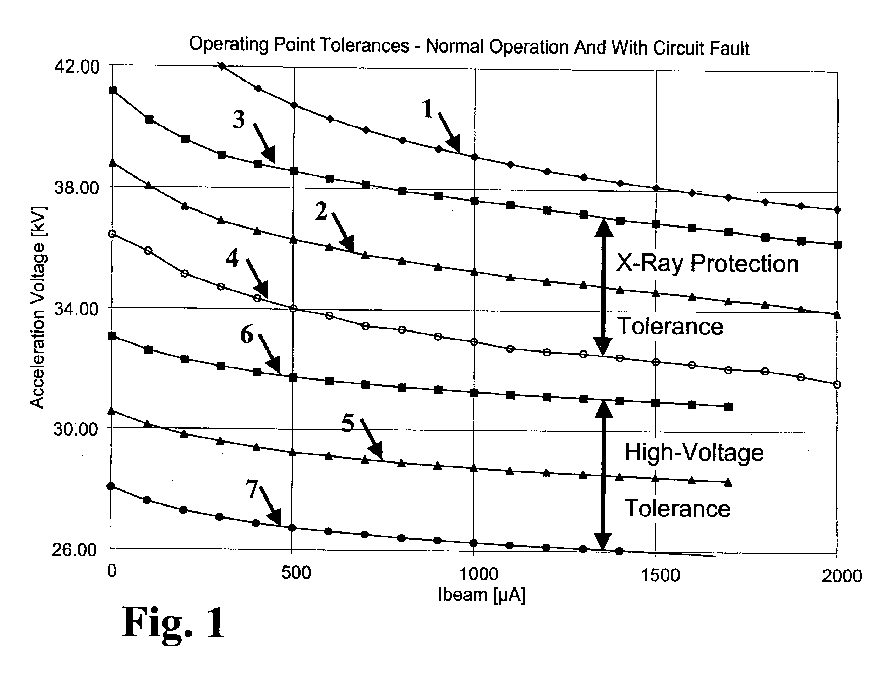

Each model of CRT has an individual maximum acceleration voltage and beam current that corresponds to a maximum allowable X-radiation emission. In many television receivers and computer displays, the anode current for "normal operation" is adjusted to always be below a maximum, worst case current, ensuring the legal regulation regarding the maximum allowable X-radiation emission is not violated. Since, at any possible operating point, and under any possible fault condition, no television or computer display instrument is allowed to emit X-radiation in excess of published limits, many television receivers and computer displays using CRTs contain "X-ray protection circuits", or XRPs. In Fig. 1, the curve (1) for maximum allowable acceleration voltage for a television receiver model is illustrated as a function of the beam current. The television receiver has a high voltage circuit tolerance of 2.5kV and an X-ray protection circuit tolerance of 2.3kV is illustrated. Curves 2, 3 and 4 show the nominal, upper and lower trip voltages of the XRP circuit, respectively, and curves 5, 6 and 7 show the nominal, upper and lower voltages of the high voltage transformer, respectively, resulting from the component tolerances. To establish compliance with legal requirements, the nominal operating high voltage is set approximately 9.5kV below the maximum value. The tolerance in the high voltage circuit may be reduced by selection of precision components. High voltage tolerance may be nearly eliminated by measuring the high voltage and providing a feedback loop to regulate the high voltage. These methods, although expensive and not well suited for mass production, have been used in television receiver and video monitor design.

One type of XRP causes the television picture to become "not viewable" when a fault is detected. One method to achieve this is to force the horizontal scan frequency high, resulting in a picture that "rolls". The disadvantage of this method is that the television receiver continues to operate with the fault present.

Another, more recent type of XRP interrupts the horizontal deflection. In televisions and monitors where the High Voltage transformer is an integral part of the deflection yoke scan current, turning off the horizontal deflection may result in ceasing generation of the high voltage, which is the accelerating potential for the electron beam, as mentioned above. In recent television receivers, the video and color processing, audio, sync separator, and timing signals for the horizontal and vertical deflection, are commonly contained in an Integrated Circuit, or chipset. Such so-called "One-Chips" often have an "X-Ray Protection" pin, which, when activated, removes the drive to the horizontal deflection. While stopping the horizontal deflection has the advantage of removing the source of the electrical field that allows acceleration of the electron beam, it may be difficult to implement, in practice. Because of the interest in larger receivers and monitors, and more light output, the horizontal scan circuitry is required to operate under a wide range of load conditions. One way to drive the horizontal scan more efficiently is to provide feedback regarding the load to the horizontal drive section. This "proportional drive" concept increases the base drive to the horizontal output switch when the load current is increased. The horizontal scan circuit, however, is a resonant circuit, by nature, and may continue to try to oscillate, even at very low drive levels. If no distinct "X-Ray protection" that stops the horizontal deflection is incorporated, it may, in the event of a fault, be difficult to remove the horizontal drive completely.

In order to activate in the event of excess X-radiation, many XRP circuits monitor an "image" of the anode voltage. Typically, an additional winding on the high voltage transformer generates this image, which follows, by virtue of magnetic coupling, the high voltage at the anode of the CRT at a fixed ratio determined by the number of windings. The additional or "X-Ray Protection" winding voltage may be rectified and compared to a reference to determine whether or not a fault has occurred. If the "XRP voltage" is below a reference level, the television instrument is assumed to be in normal operation. If the "image-voltage" representing the anode voltage exceeds a set reference level, which indicates exceeding of the admissible high voltage, or the rate of X-rays emitted by the CRT, the X-ray protection circuit must cause the instrument to cease "normal operation".

One method to compensate for XRP circuit tolerances mentioned above is to add a variable resistor, or potentiometer, to adjust either the reference voltage to the XRP circuit, or the "image voltage" generated in the additional winding. During production alignment, the scan supply may be increased until the target high voltage for XRP circuit activation is reached. The potentiometer is then adjusted until the XRP output changes its state, indicating a fault has occurred. However, using potentiometers may cause many problems. As a mechanical device, it is subject to contamination, vibration, thermal expansion and contraction, and aging. Often, to reduce the chance the alignment will be changed adhesives or protective cases are used.

Another method to reduce the effects of circuit tolerances is disclosed in the US patent US 6,057,687 (Cheng et al.), assigned to Mag Technology Co. Ltd., Taipei, Taiwan. The method presented in Cheng uses sampling and converting to digital of a rectified "image voltage", generated in an additional winding. A microprocessor periodically polls the digitized value of the voltage corresponding to the high voltage from the analog to digital converter and compares the result with a high and a low limit, stored in a memory, which have been calibrated during production alignment. On crossing any of the upper or lower limits, the microprocessor issues a signal, cutting off the power supply to the high voltage transformer.

An "open loop" method of reducing the high voltage tolerance during production alignment is to adjust the feedback of the power supply, which energizes the primary winding of the high voltage, until the desired target value of high voltage is obtained. This alignment method, however, may increase the tolerance in any other secondary supplies for other circuits.

It is desirable to provide a CRT display X-ray protection device, which overcomes the problems of large tolerances, avoids the susceptibility to environmental influences and aging, allows for simple alignment and adjustment during manufacturing and ensures safe cut-off of high voltages generating X-radiation.

According to the invention a device for use in a display device incorporating a cathode ray tube actuated by high voltage generated in a high voltage generator using a periodically actuated switch is presented, which allows for selecting a reference value from a set of reference values, depending on the selected operating mode of the display device, and supplying a signal corresponding to the selected reference value to a comparator for comparing the reference signal with a sensed signal representing the high voltage and for issuing a fault signal indicating excessive high voltage, upon which the high voltage generator is disabled. This advantageously allows for compensating of tolerances in a high voltage circuit due to component tolerances for different selectable operating modes and for avoiding emission of excessive X-radiation due to excessive high voltage. Different operating modes include different scan frequencies or different models of CRTs used. A further benefit is the possibility to individually align and adjust each display device during production, therefore reducing the reject rate during production tests. According to another aspect of the invention, the use of a capacitive voltage divider for obtaining a sensed representation of the high voltage makes an additional winding for generating a sensed signal unnecessary. In accordance with yet another aspect of the invention, a device for storing multiple representations of a set of reference values is presented, which advantageously allows for safe retrieval of the selected reference value and for safe detection of a device fault in case the retrieval is impossible, and disabling of the high voltage generation upon detection of a device fault.

In the drawings,
Fig.1 shows the operating point tolerances of the high voltage generator and the X-ray protection circuit for an exemplary high voltage circuit built according the state of the art, along with the maximum allowable acceleration voltage for an exemplary model of CRT,
Fig.2 shows a block diagram of a display incorporating a CRT and the high voltage circuit according to the invention, and
Fig.3 shows a detailed view of a portion of the inventive circuit from Fig.2

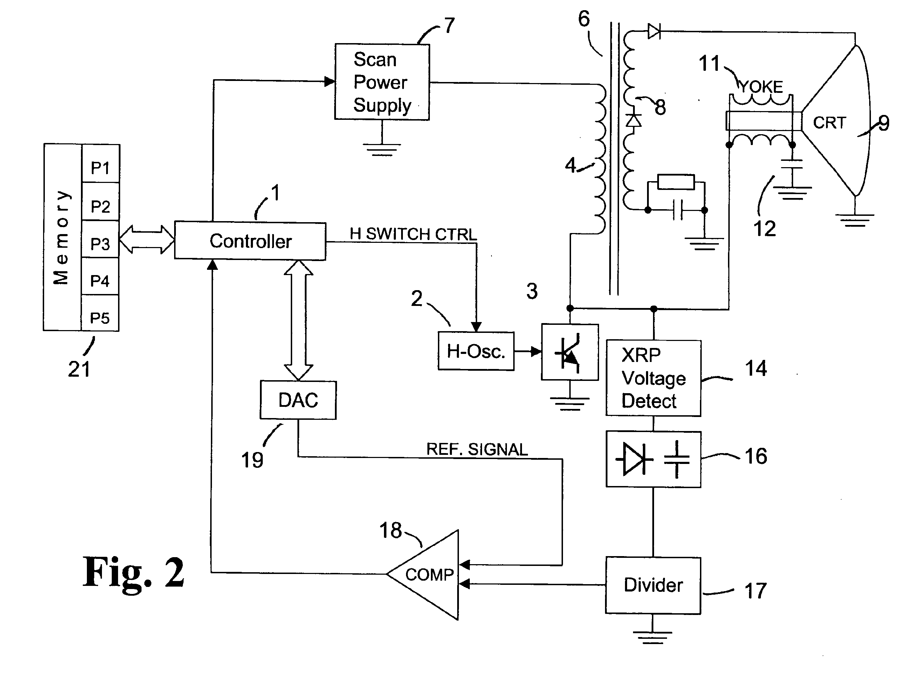

Fig. 2 shows in a simplified schematic diagram a TV receiver or a computer monitor having a CRT. A controller 1 is controlling a means 2 for generating a drive signal for the horizontal scanning switch 3. Horizontal scanning switch 3 is connected to one end of a primary winding 4 of a high voltage transformer 6. The other end of the primary winding 4 is connected to a scan power supply 7. By switching the horizontal scan switch 3, a high voltage is generated in the secondary winding. 8 of high voltage transformer 6. The high voltage is connected to the cathode ray tube (CRT) 9 in order to supply an accelerating potential for the electron beam issued by the anode electrode of the CRT (not shown). The electron beam passes through a magnetic field, generated by a yoke 11 and controlled by the horizontal switch 3, and is thereby deflected in a raster scanning way. Yoke 11 is connected to a retrace capacitor 12 at one end, and at the other end is connected to the horizontal scanning switch 3. A voltage detecting circuit 14 is connected to the horizontal scanning switch 3 and delivers a voltage that is rectified in a rectifying stage 16. The rectified signal representing the voltage detected in voltage detecting circuit 14 is fed to a signal divider 17, which presents at its output a sensed signal that is fed to one input of a signal comparator 18. Controller 1 is connected to a digital-to-analog converter (DAC) 19, and a memory 21. In the memory, multiple instances of a set of reference values are stored in different locations, often referred to as pages, shown in the drawing as P1...P5 of memory 21. In order to ensure safe retrieval of the data from the memory, even in case of a physical failure in some cells of the memory, the pages may be located in different physical areas in the memory. By reading at least two different instances of the identical set of reference values from the different locations in the memory and subsequent comparing of the retrieved data it is ensured that the data read is valid data. Further checking may include verification of the reference value by comparing with an upper and lower limit value. Based on the reference values retrieved from memory 21, the controller 1 adjusts the analog output of DAC 19. The signal output from DAC 19 is fed to another input of signal comparing means 18 as a reference signal. The output signal of comparator 18 is input to the controller 1. It is assumed that the high voltage transformer 6 generates at its secondary winding 8 a high voltage proportional to the ratio of the primary and secondary winding and the input supply voltage. Therefore, by detecting the voltage across the horizontal scanning switch 3, an information about the high voltage at the secondary winding 8 is derived without the need of directly sampling the high voltage or using a tertiary winding to generate a third voltage, which is used as an indicator for the value of the high voltage.

However, in an alternative embodiment of the invention, a tertiary winding is used to generate the third voltage. In fact, also a supplementary winding on the primary side of the high voltage transformer 6 represents a possible source for the third voltage.

During manufacturing of the TV receiver or the computer monitor, data for the specific CRT 9 used are stored in the memory 21 in the way described above. Thus, the same high voltage circuit can be used for different CRT models having different requirements as to the trip level for the XRP circuit.

The reference signal issued by DAC 19 is compared to the signal representing the high voltage at the secondary winding of high voltage transformer 6. On exceeding the reference value, the signal comparator's output changes its state. Controller 1 detects the signal change and immediately inhibits horizontal scanning by controlling the means for generating the horizontal drive signal accordingly, thus inhibiting the generation of high voltage and thereby removing the source for the X-radiation. Furthermore, controller 1 issues a protection sequence that may include restarting of the TV receiver or the computer monitor for a defined number of times, or storing an error code in the memory for service purposes.

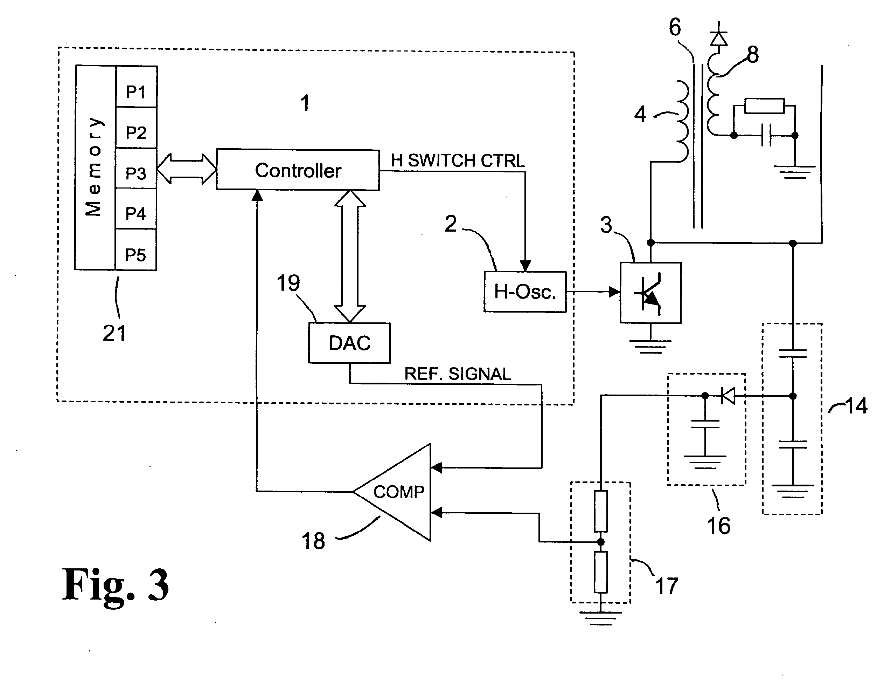

Fig. 3 shows a part of a preferred embodiment of the inventive circuit from Fig. 2 in more detail. In this embodiment, controller 1, means for generating the horizontal drive signal 2, DAC 19 and memory 21 are incorporated in one integrated circuit (IC) 26. Other embodiments, not shown in Fig. 3, having ICs containing more, less, or other parts of the inventive circuit shall be included in the invention and the claims. Voltage detecting circuit 14 comprises a capacitive divider, rectifying stage 16 comprises a diode and a capacitor, and divider 17 comprises current limiting means, e.g. resistors.

## Claims

1. A high voltage circuit for a display device incorporating a cathode ray tube, comprising
a high voltage generator, comprising a transformer and a periodically actuated switch,
means for obtaining a sensed signal, representing the high voltage applied to the cathode ray tube, and
a comparator for comparing a reference signal and the sensed signal representing the high voltage and for outputting a fault signal indicative of excessive high voltage,
**characterized by**
a memory storing representations of a set of reference values, each reference value being associated with a selectable operating mode of the display device,
means for supplying the reference signal corresponding to the reference value associated with a selected operating mode, and
means for disabling the high voltage generator upon occurrence of the fault signal.

2. Circuit according to claim 1, **characterized in that** the means for supplying the reference value is a digital-to-analog converter.

3. Circuit according to claim 1, **characterized in that** upon occurrence of the fault signal the means for disabling the high voltage generator is effective to terminate the periodical actuation of the switch.

4. Circuit according to claim 1, **characterized in that** the sensed signal is obtained by means of a capacitive voltage divider.

5. Circuit according to claim 1, **characterized in that** a rectifier rectifies the sensed signal.

6. Circuit according to claim 1, **characterized in that** the memory is a non-volatile memory.

7. Circuit according to claim 1, **characterized in that** multiple instances of identical representations of a set of reference values are stored in the memory in different locations.

8. Circuit according to claim 7, **characterized in that** the multiple instances of identical representations of a set of reference values are stored in different physical areas in the memory.
